# EUROPÄISCHE PATENTSCHRIFT

(11) **EP 3 893 444 B1**
(45) Veröffentlichungstag und Bekanntmachung des Hinweises auf die Patenterteilung: **20.07.2022**
(21) Anmeldenummer: 21159026.0
(22) Anmeldetag: 24.02.2021
(51) Int. Cl.: H04L 12/28

(54) **VERFAHREN ZUM STEUERN EINES KNX-FÄHIGEN ELEMENTS EINES GEBÄUDEAUTOMATISIERUNGSSYSTEMS UND ANORDNUNG**
METHOD FOR CONTROLLING A KNX-CAPABLE ELEMENT OF A BUILDING AUTOMATION SYSTEM AND ARRANGEMENT
PROCÉDÉ DE COMMANDE D'UN ÉLÉMENT APTE AU KNX D'UN SYSTÈME D'AUTOMATISATION DU BÂTIMENT ET AGENCEMENT

(30) Priorität: 07.04.2020 DE 102020109672
(43) Veröffentlichungstag der Anmeldung: 13.10.2021
(73) Patentinhaber: snom technology GmbH, 13509 Berlin (DE)
(72) Erfinder: GOLPE VARELA, Simón, 13349 Berlin (DE)
(74) Vertreter: Bittner, Thomas L.

(56) Entgegenhaltungen:
- CN-A- 106 850 359
- US-A1- 2020 044 884
- CAVALIERI SALVATORE ET AL: "Limiting the loss of information in KNXnet/IP on congestion conditions", COMPUTER NETWORKS, ELSEVIER, AMSTERDAM, NL, Bd. 73, 27. August 2014 (2014-08-27), Seiten 154-172, XP029050561, ISSN: 1389-1286, DOI: 10.1016/J.COMNET.2014.08.012

## Beschreibung

Die Erfindung betrifft ein Verfahren zum Steuern eines KNX-fähigen Elements eines Gebäudeautomatisierungssystems sowie einer Anordnung.

### Hintergrund

Gebäudeautomatisierungssysteme vereinigen mehrere Elemente, die dazu dienen, unterschiedliche Funktionalitäten bei Gebäuden zu steuern. Hierzu gehören zum Beispiel Klimatisierung und Beleuchtung. Um elektronische Daten zwischen den Elementen eines solchen Gebäudeautomatisierungssystems auszutauschen, insbesondere zum Übertragen von Steuerdaten im Betrieb, kann in dem Gebäudeautomatisierungssystem beispielsweise ein Feldbussystem basierend auf dem KNX-Standard implementiert werden. Mittels KNX können unterschiedlichste Elemente des Gebäudeautomatisierungssystems gesteuert werden, beispielsweise Beleuchtung, Sonnenschutzeinrichtungen wie Jalousie oder Beschattungseinrichtungen, aber auch die Gebäudeheizung sowie Schließ- und Alarmanlagen. KNX ermöglicht auch die Fernüberwachung und -steuerung der Gebäudeautomatisierung.

Die Patentschrift US 2020/044884 A1 offenbart ein Multiprotokoll-Steuersystem zur Heimautomatisierung, in dem ein mobiles Kommunikationsendgerät, z. B. ein Smartphone, über einen Webserver auf Heimautomatisierungsgeräte zugreifen kann. Die Heimautomatisierungsgeräte können durch einen gerätespezifischen Ressourcenlokalisierer, DURL, adressiert werden. Ein gegebenes Beispiel für die DURL eines KNX-Geräts ist knx://0201-0001-1234/1.1.3. Die Bestandteile der DURL entsprechen einem Gerät, das mit einer individuellen Adresse 1.1.3 über das KNX-Protokoll kommuniziert. Das Gerät ist über eine zentrale Steuereinheit zugänglich, die ihrerseits die Kennung #0201-0001-1234 besitzt.

### Zusammenfassung

Aufgabe der Erfindung ist es, ein Verfahren zum Steuern eines KNX-fähigen Elements eines Gebäudeautomatisierungssystems sowie einer Anordnung zu schaffen, mit denen KNX-fähige Elemente des Gebäudeautomatisierungssystems im Betrieb zuverlässig und auf einfache Art und Weise gesteuert werden können.

Zur Lösung sind ein Verfahren zum Steuern eines KNX-fähigen Elements eines Gebäudeautomatisierungssystems nach dem unabhängigen Anspruch 1 sowie einer Anordnung nach dem unabhängigen Anspruch 13 geschaffen. Ausgestaltungen sind Gegenstand von abhängigen Unteransprüchen.

Nach einem Aspekt ist ein Verfahren zum Steuern eines KNX-fähigen Elements eines Gebäudeautomatisierungssystems geschaffen, wobei bei dem Verfahren eine Befehlseingabe in einer IP-fähigen Telekommunikationseinrichtung empfangen und als Reaktion auf die Befehlseingabe in der IP-fähigen Telekommunikationseinrichtung ein Aktions-Befehl bereitgestellt wird, der Folgendes umfasst: eine IP-Adresse einer Gateway-Einrichtung, welche mit einem Gebäudeautomatisierungssystem verbunden ist, in dem ein KNX-Busstandard implementiert ist; eine Gruppenadresse, die (mindestens) einem KNX-fähigen Element zugeordnet ist; und einen Steuerbefehl zum Steuern des KNX-fähigen Elements. Weiterhin umfasst das Verfahren Folgendes: Übertragen des Aktions-Befehls an die Gateway-Einrichtung; Bereitstellen von Gruppenadress-Information in der Gateway-Einrichtung; Bestimmen, ob die Gruppenadresse von der Gruppenadress-Information umfasst ist; Bereitstellen eines KNX-Befehls in der Gateway-Einrichtung, wenn die Gateway-Einrichtung die Gruppenadresse als von Gruppenadress-Information umfasst bestimmt wurde, wobei der KNX-Befehl dem KNX-Busstandard entsprechend ausgebildet ist und zumindest der Gruppenadresse des KNX-fähigen Elements und den Steuerbefehl umfasst; Übertragen des KNX-Befehls von der Gateway-Einrichtung an das KNX-fähige Element in dem Gebäudeautomatisierungssystem und Steuern eines Betriebszustands des KNX-fähige Elementes entsprechend dem Steuerbefehl.

Nach einem weiteren Aspekt ist eine Anordnung geschaffen, bei der eine IP-fähige (IP - Internet-Protokoll) Telekommunikationseinrichtung, eine Gateway-Einrichtung und ein KNX-fähiges Element für Folgendes eingerichtet sind: Empfangen einer Befehlseingabe in der IP-fähigen Telekommunikationseinrichtung und Bereitstellen eines Aktions-Befehls als Reaktion auf die Befehlseingabe in der IP-fähigen Telekommunikationseinrichtung, wobei der Aktions-Befehl Folgendes umfasst: eine IP-Adresse der Gateway-Einrichtung, welche mit einem einen KNX-Busstandard implementierenden Gebäudeautomatisierungssystem verbunden ist; eine Gruppenadresse, die dem (mindestens) KNX-fähigen Element zugeordnet ist; und einen Steuerbefehl zum Steuern des KNX-fähigen Elements. Weiterhin sind die Elemente der Anordnung für Folgendes eingerichtet: Übertragen des Aktions-Befehls an die Gateway-Einrichtung; Bereitstellen von Gruppenadress-Information in der Gateway-Einrichtung; Bestimmen, ob die Gruppenadresse von der Gruppenadress-Information umfasst ist; Bereitstellen eines KNX-Befehls in der Gateway-Einrichtung, wenn die Gateway-Einrichtung die Gruppenadresse als von Gruppenadress-Information umfasst bestimmt wurde, wobei der KNX-Befehl dem KNX-Busstandard entsprechend ausgebildet ist und zumindest der Gruppenadresse des KNX-fähigen Elements und den Steuerbefehl umfasst; Übertragen des KNX-Befehls von der Gateway-Einrichtung an das KNX-fähige Element in dem Gebäudeautomatisierungssystem und Steuern eines Betriebszustands des KNX-fähige Elementes entsprechend dem Steuerbefehl.

Mit Hilfe der vorgeschlagenen Technologie ist es ermöglicht, unter Verwendung der IP-fähigen Telekommunikationseinrichtung beliebige KNX-fähige Elemente in dem Gebäudeautomatisierungssystem auf einfache Weise im Betrieb zu steuern, was insbesondere auch eine kostensparende Implementierung der Steuerung für das Gebäudeautomatisierungssystem erlaubt. Hierzu ist die Gateway-Einrichtung vorgesehen, die in der IP-fähigen Telekommunikationseinrichtung bereitgestellte Aktions-Befehle, die in dieser direkt erzeugt werden können, in den KNX-Busstandard übersetzt, so dass der vom Aktions-Befehl umfasste Steuerbefehl von dem KNX-fähigen Element des Gebäudeautomatisierungssystems schließlich im Betrieb ausgeführt wird. Beispielsweise kann hierdurch eine Beleuchtung an- oder ausgeschaltet werden. Ähnliches kann in Verbindung mit dem Ein- oder Ausschalten einer Gebäudeheizung vorgesehen sein. Grundsätzlich können mit Hilfe der vorgeschlagenen Technologie beliebige Funktionen des Gebäudeautomatisierungssystems mittels Befehlseingabe an der IP-fähigen Telekommunikationseinrichtung gesteuert werden.

Die Datenkommunikation zwischen den vorgesehenen Elementen der Anordnung kann leitungsgebundene und / oder drahtlose Datenkommunikation umfassen.

Der vorgesehene Aufbau des Aktions-Befehls ermöglicht es der Gateway-Einrichtung, einerseits den empfangenen Aktions-Befehl dem KNX-fähigen Element des Gebäudeautomatisierungssystems zuzuordnen und andererseits den Steuerbefehl so umzuwandeln, dass dieser von dem KNX-fähigen Element schließlich ausführbar ist.

Hierbei kann die Gruppenadress-Information in der Gateway-Einrichtung beispielweise als eine Zuordnung zwischen mehreren Gruppenadressen einerseits und KNX-fähigen Elementen andererseits bereitgestellt werden, sei es in einem lokalen Speicher oder für den Abruf von einem zentralen Speicher, zum Beispiel in einer Server-Einrichtung. Beispielweise kann die Gruppenadress-Information hierzu eine oder mehrere Lookup-Tabellen umfassen. Eine Gruppenadresse kann einem oder mehreren KNX-fähigen Elementen zugeordnet sein. Im Fall der Zuordnung von mehreren KNX-fähigen Elementen zu einer (einzelnen oder gemeinsamen) Gruppenadresse können diese mittels des Aktions-Befehls gesteuert werden. Wenn einer Gruppenadresse nur ein einziges KNX-fähiges Element zugeordnet ist, wird dieses mittels Aktions-Befehl gesteuert werden.

Beim Bestimmen, ob die Gruppenadresse von der Gruppenadress-Information umfasst ist, kann vorgesehen sein, dass hierbei auch bestimmt wird, ob das KNX-fähige Element von dem Gebäudeautomatisierungssystem umfasst ist. Hierzu kann in einer Ausgestaltung von der Gateway-Einrichtung Zusatzinformation ausgewertet werden, die die Zugehörigkeit der Gruppenadresse (also des zugeordneten KNX-fähigen Elements) zum Gebäudeautomatisierungssystem anzeigt.

Die IP-fähige Telekommunikationseinrichtung weist ein oder mehrere Prozessoren sowie ein Speichereinrichtung auf, die zur Datenverarbeitung nutzbar sind. Ein oder mehrere Software-Applikationen sind hierzu auf der IP-fähigen Telekommunikationseinrichtung implementiert.

Der Aktions-Befehl kann in der IP-fähigen Telekommunikationseinrichtung weiterhin eine Port-Identifizierung umfassend bereitgestellt werden, welche ein Zugriffs-Port eines Webservers angibt, der in der Gateway-Einrichtung implementiert ist, und auf das Empfangen des Aktions-Befehls in dem Gateway-Einrichtung über den Zugriffs-Port auf den Webserver zugegriffen wird. Die Port-Identifizierung gibt an, welcher Port für den Zugriff auf den Webserver in der Gateway-Einrichtung zu nutzen ist, also hierfür bereitgestellt ist.

In der Gateway-Einrichtung können verschiedene Webservers implementiert sein: (i) Ein KNX-Webserver für das Empfangen des Aktions-Befehls an ein Eingangs-Port der Gateway-Einrichtung und (ii) ein weiterer Webserver für einen Zugriff auf eine Web-Oberfläche der Gateway-Einrichtung und für einen Zugriff auf Dateien zur Steuerung über ein Navigationsmenü über ein anderes Eingangs-Port.

Die Befehlseingabe kann in einem IP-fähigen Telefon empfangen werden, und der Aktions-Befehl kann als Reaktion hierauf in dem IP-fähigen Telefon bereitgestellt werden. Auf diese Weise ist es ermöglicht, mittels Befehlseingabe an einem IP-fähigen Telefon ("*Voice over IP*"; IP - Internetprotokoll), beliebige KNX-fähige Elemente des Gebäudeautomatisierungssystems zu steuern. Die Befehlseingabe kann sich hierbei auf ein KNX-fähiges Element des Gebäudeautomatisierungssystems in dem Raum beziehen, in dem das IP-fähige Telefon angeordnet ist. Gleiches gilt für andere IP-fähige Telekommunikationseinrichtungen. Auf diese Weise kann ein Benutzer beispielsweise die Beleuchtung und / oder die Heizung in dem Raum des Gebäudes steuern, in dem das Telefon angeordnet ist. Es kann dann wahlweise vorgesehen sein, auf andere Steuerungseinrichtungen wie Schalter oder Taster für die Beleuchtung / Heizung in dem Raum zu verzichten, da allein die Bedienung des IP-fähigen Telefons diese Steuerungsoptionen bereitstellt. Ähnliches kann in Verbindung mit anderen IP-fähigen Telekommunikationseinrichtungen vorgesehen sein.

In der IP-fähigen Telekommunikationseinrichtung kann weiterhin Folgendes vorgesehen sein: Empfangen der Befehlseingabe über eine Funktionstaste der IP-fähigen Telekommunikationseinrichtung und Bestimmen eines Steuerbefehls, welcher der Funktionstaste zugeordnet ist. Die Eingabe über die Funktionstaste kann von einem Benutzer initiiert werden. Funktionstasten können an der IP-fähigen Telekommunikationseinrichtung auf verschiedene Art und Weise bereitgestellt werden, sei es mittels einer Taster-Einrichtung und / oder berührungssensitiven Flächen auf einem berührungssensitiven Display. Alternativ oder ergänzend kann die IP-fähige Telekommunikationseinrichtung eingerichtet sein, Spracheingaben des Nutzers über eine Nutzerschnittstelle zu empfange. Als Reaktion auf das Empfangen der Befehlseingabe über die Funktionstaste wird ein Aktions-Befehl bestimmt, welcher der Befehlseingabe (der Funktionstaste) zugeordnet ist. Dies kann in der IP-fähigen Telekommunikationseinrichtung selbst ausgeführt werden. Beispielsweise kann die Befehlseingabe das An- oder Ausschalten einer Beleuchtung oder einer Heizung betreffen. Auch eine Lichtschutzeinrichtung an Gebäudefenstern kann auf diese Weise bedient werden. Im Fall der Spracheingabe (Befehlseingabe) wird diese ausgewertet, einen darin enthaltenen Benutzerbefehl (Steuerbefehl) zu bestimmen.

Weiterhin kann Folgendes vorgesehen sein: Bereitstellen von Zuordnungsdaten in einer Speichereinrichtung, die mit der IP-fähigen Telekommunikationseinrichtung verbunden ist, wobei die Zuordnungsdaten für das KNX-fähige Element und ein weiteres KNX-fähiges Element des Gebäudeautomatisierungssystems eine Zuordnung zwischen verschiedenen Aktions-Befehlen und Funktionstasten der IP-fähigen Telekommunikationseinrichtung anzeigen; und Bestimmen, eines Aktions-Befehls aus den verschiedenen Aktions-Befehlen, welcher der Funktionstaste zugeordnet ist, über welche die Befehlseingabe empfangen wird. Die Zuordnungsdaten sind in einer Speichereinrichtung hinterlegt, die Teil der IP-fähigen Telekommunikationseinrichtung oder getrennt hiervon gebildet sein kann, zum Beispiel in einer zentralen Servereinrichtung. Eine Mehrzahl von Funktionstasten steht zur Verfügung, wobei den Funktionstasten jeweils ein oder mehrere Aktions-Befehle zugeordnet sein können. Im Fall der Zuordnung mehrerer Aktions-Befehle zu ein und derselben Funktionstaste kann der als Reaktion bestimmte Aktions-Befehl zum Beispiel davon abhängen, ob die Funktionstaste einmalig oder mehrmalig bedient wurde.

Weiterhin kann bei dem Verfahren Folgendes vorgesehen sein: Empfangen einer Zuordnungseingabe in der IP-fähigen Telekommunikationseinrichtung, welche für das KNX-fähige Element und das weitere KNX-fähige Element des Gebäudeautomatisierungssystems die Zuordnung zwischen den verschiedenen Aktions-Befehlen und den Funktionstasten der IP-fähigen Telekommunikationseinrichtung anzeigt; und Erzeugen der Zuordnungsdaten. Die Zuordnungseingabe, die von einem Benutzer oder einer entfernten Servereinrichtung empfangen werden kann, dient dazu, die Zuordnungsdaten individuell festzulegen. Hierbei kann vorgesehen sein, dass auf das Empfangen der Zuordnungseingabe eine bereits bestehende Zuordnung zwischen dem KNX-fähigen Elementen und den Aktions-Befehlen teilweise oder vollständig geändert wird. Auf diese Weise ist es ermöglicht, die Zuordnungsdaten situations- und betriebsabhängig zu erzeugen und wahlweise zu ändern.

Das Empfangen der Befehlseingabe und / oder der Zuordnungseingabe kann Folgendes umfassen: Empfangen einer Befehlseingabe und / oder einer Zuordnungseingabe durch einen Benutzer über eine grafische Benutzerschnittstelle der IP-fähigen Telekommunikationseinrichtung. Die grafische Benutzerschnittstelle kann beispielsweise an einem Display der IP-fähigen Telekommunikationseinrichtung bereitgestellt sein und ermöglicht es dem Benutzer, die Befehlseingabe und / oder die Zuordnungseingabe einzugeben und so eine Konfiguration der Zuordnungsdaten sowie ein Steuerung des KNX-fähigen Elements vorzunehmen.

Das Empfangen der Befehlseingabe kann weiterhin Folgendes umfassen: Detektieren von Sensorsignalen mittels einer Sensoreinrichtung; Bereitstellen von Steuerdaten als Reaktion auf die detektierten Sensorsignale in der IP-fähigen Telekommunikationseinrichtung und Erzeugen des Aktions-Befehls als Reaktion auf die Steuerdaten in der IP-fähigen Telekommunikationseinrichtung. Bei dieser Ausführungsform ist vorgesehen, dass die Befehlseingabe, welche in der IP-fähigen Telekommunikationseinrichtung zum Bereitstellen des Aktions-Befehls führt, durch Steuerdaten ausgelöst wird, die aus Sensorsignalen abgeleitet wurden, welche zuvor mit Hilfe einer Sensoreinrichtung detektiert werden. Auf diese Weise kann die Steuerung des KNX-fähigen Elements in dem Gebäudeautomatisierungssystem automatisiert in Abhängigkeit von den Sensorsignalen erfolgen. Beispielsweise kann es sich um einen Licht empfindlichen Sensor handeln, der Sensorsignale liefert, die einen Helligkeitszustand in einem Raum des Gebäudes anzeigen, worauf die Raumbeleuchtung mit Hilfe der Steuerung des KNX-fähigen Elements eingestellt wird. Alternativ oder ergänzend kann ein Temperatursensor zum Einsatz kommen. Auch andere Sensoren können vorgesehen sein, zum Beispiel ein Feuchtigkeitssensor.

In einer Ausgestaltung kann ein Näherungssensor vorgesehen sein, der an der IP-fähigen Telekommunikationseinrichtung oder getrennt hiervon angeordnet sein kann. Der Näherungssensor kann eingerichtet sein, die Annäherung und wahlweise das Entfernen einer Person in Bezug auf die Sensoreinrichtung zu detektieren, worauf die Steuerdaten und der Aktions-Befehl bereitgestellt werden, zum Beispiel zum Ein- oder Ausschalten einer Beleuchtung.

In der Speichereinrichtung, die Teil der IP-fähigen Telekommunikationseinrichtung oder getrennt hiervon gebildet ist, können weitere Zuordnungsdaten gespeichert sein, die eine Zuordnung zwischen Sensorsignalen und hieraus abzuleitenden Steuerdaten anderseits anzeigen, so dass auf dem Empfang der Sensorsignale anhand der gespeicherten weiteren Zuordnungsdaten das Bestimmen und Bereitstellen der Steuerdaten erfolgen kann. In ähnlicher Weise können die Steuerdaten dann einem oder mehreren Aktions-Befehlen zugeordnet sein, so dass schließlich bestimmten detektierten Sensorsignalen ein oder mehrere Aktions-Befehle zugeordnet sind.

Beim Detektieren können Sensorsignale mittels einer internen Sensoreinrichtung erfasst werden, die von der IP-fähigen Telekommunikationseinrichtung umfasst ist. Bei dieser Ausgestaltung ist vorgesehen, Sensorsignale mittels der internen Sensoreinrichtung zu erfassen, die Teil der IP-fähigen Telekommunikationseinrichtung ist.

Beim Detektieren können Sensorsignale mittels einer externen Sensoreinrichtung erfasst werden, die getrennt von der IP-fähigen Telekommunikationseinrichtung gebildet und mit dieser zur Signalübertragung verbunden sind. Alternativ oder ergänzend zur internen Sensoreinrichtung ist hierbei eine externe Sensoreinrichtung vorgesehen, die getrennt von der IP-fähigen Telekommunikationseinrichtung angeordnet ist. Beispielsweise kann es sich um einen Sensor irgendwo in einem Raum des Gebäudes handeln, für den zum Beispiel Licht oder Temperatur zu regeln sind.

In einer möglichen Ausgestaltung kann die externe Sensoreinrichtung in eine Lichtschalter-Dose angeordnet sein, sei es in einer Unterputz- oder einer Überputzinstallation.

Das KNX-fähige Element kann auf den Empfang des KNX-Befehls eine Antwort-Nachricht erzeugen und an die Gateway-Einrichtung senden, welche die Antwort-Nachricht wahlweise an die IP-fähige Telekommunikationseinrichtung sendet oder weitergibt. Hierbei kann die Antwort-Nachricht eine Status-Information umfassen, die den aktuellen Status des KNX-fähigen Elements nach dem Ausführen des Steuerbefehls anzeigt. Es kann vorgesehen sein, die Antwort-Nachricht in der IP-fähigen Telekommunikationseinrichtung auszuwerten und für eine optische und / oder eine akustische Ausgabe über eine Ausgabeeinrichtung der IP-fähigen Telekommunikationseinrichtung Ausgabedaten zu erzeugen, die den aktuellen Status des KNX-fähigen Elements.

Der Aktions-Befehl und / oder die verschiedenen Aktions-Befehle können jeweils als eine HTTP-Anfrage (HTTP - Hypertext Transfer Protocol) ausgebildet werden. Bei dieser oder anderen Ausführungsformen kann der Aktions-Befehl einer sogenannten URL (einheitlicher Ressourcenzeiger) entsprechend ausgebildet sein. Alternativ zu http können andere Netzwerkprotokolle zum Einsatz kommen.

Die IP-fähige Telekommunikationseinrichtung kann in einer Ausgestaltung mit einer Mobilfunk-Basisstation (zum Beispiel 5G NR) oder einer DECT-Basisstation ausgebildet sein (DECT - *Digital Enhanced Cordless Telecommunications).* Die DECT-Basisstation empfängt einen Befehl oder eine Anfrage über eine / von einer DECT-fähige(n) (mobile(n)) Komponente und schickt hierauf eine HTTP-Anfrage ans Netzwerk, also an die Gateway-Einrichtung.

Die externe Sensoreinrichtung kann selbst eine IP-fähige Sensoreinrichtung sein, welche HTTP-Anfragen kabellos oder kabelgebunden bereitstellen und übertragen kann. Die externe Sensoreinrichtung kann ein Bluetooth (Beacons)-DECT-Gateway aufweisen. Die als solche bekannte Beacons- / Bluetooth-Technologie wird auch für die Ortung von Geräte oder Tracking (Lokation) benutzt. DECT-fähige Komponenten können eingerichtet sein, Beacons bzw. Bluetooth-Signale zu senden. Diese werden von einem Beacons-Gateway in DECT-Signale umgewandelt, und eine DECT-Basisstation kann hierauf HTTP-Anfragen an die Gateway-Einrichtung senden, um das KNX-fähige Element zu steuern, zum Beispiel eine Anlage oder einen Lichtschalter zu schalten.

Die IP-fähige Telekommunikationseinrichtung kann eingerichtet sein, über eine akustische / optische Ausgabeeinrichtung Audio- und / oder Videodaten für eine Nutzerinformation ("Public Announcement") auszugeben. Beispielweise kann vorgesehen sein, dass eine solche Sprach- oder Bildausgabe erfolgt, wenn eine mit der IP-fähigen Telekommunikationseinrichtung verbundene Sensoreinrichtung Sensorsignale übersendet, die eine Gefahrensituation anzeigen, zum Beispiel ein Rauch- oder Feuermelder.

Es kann vorgesehen sein, beim Übertragen des Aktions-Befehls von der IP-fähigen Telekommunikationseinrichtung an die Gateway-Einrichtung und / oder beim Übertragen des KNX-Befehls von der Gateway-Einrichtung an das KNX-fähige Element eine Verschlüsselung der zu übertragenden Daten einzusetzen. Es kann vorgesehen sein, dass die Gateway-Einrichtung eingerichtet ist, von dem KNX-fähige Element empfangene verschlüsselte Daten zu entschlüsseln und um die entschlüsselten Daten in ein IP-Protokoll zu übersetzen, um sie dann dem IP-Protokoll entsprechend an die IP-fähige Telekommunikationseinrichtung zu senden. Verschlüsselungstechniken sind als solche in verschiedenen Ausführungsformen bekannt.

Die vorangehend in Verbindung mit dem Verfahren erläuterten Ausgestaltungen können im Zusammenhang mit der Anordnung entsprechend vorgesehen sein.

### Beschreibung von Ausführungsbeispielen

Im Folgenden werden weitere Ausführungsbeispiele unter Bezugnahme auf eine Figur erläutert.

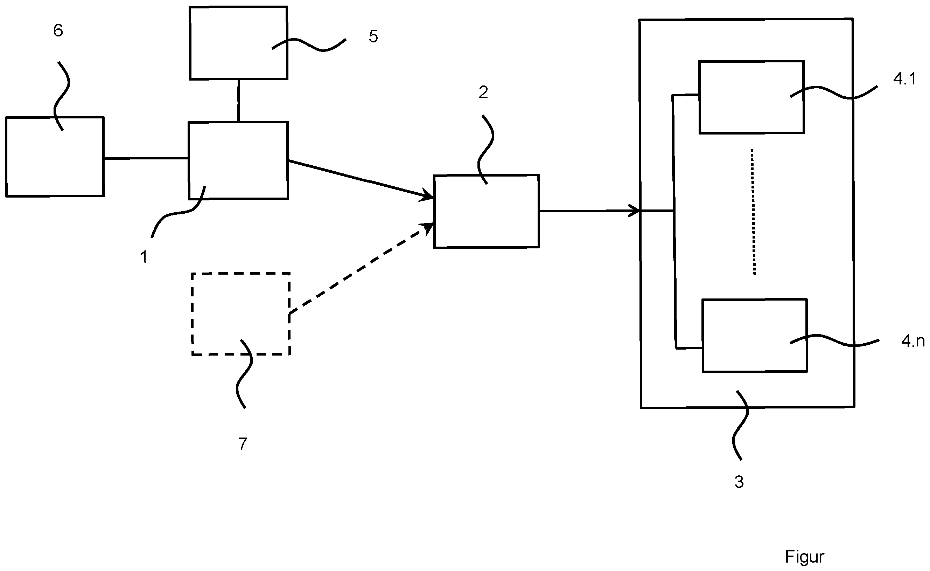

Die Figur zeigt eine schematische Darstellung einer Anordnung mit einer IP-fähigen Telekommunikationseinrichtung 1, einer Gateway-Einrichtung 2 sowie einen hiermit verbundenen Gebäudeautomatisierungssystem 3. In dem Gebäudeautomatisierungssystem 3 sind mehrere KNX-fähige Elemente 4.1,..., 4.n vorgesehen, die zur Steuerung unterschiedlicher Funktionalitäten der Gebäudeautomatisierung dienen, zum Beispiel in Verbindung mit dem Steuern einer Beleuchtung und / oder einer Heizung. Für den Datenaustausch in dem Gebäudeautomatisierungssystem 3 ist hierin der KNX-Busstandard implementiert. Dieser Standard ist als solcher bekannt.

Die Gateway-Einrichtung 2 ermöglicht es, mittels Befehlseingabe an der IP-fähigen Telekommunikationseinrichtung 1 beliebige Funktionen der KNX-fähigen Elemente 4.1,..., 4.n in dem Gebäudeautomatisierungssystem 3 zu steuern. Die Befehlseingabe kann insbesondere mit Hilfe einer Benutzereingabe an der IP-fähigen Telekommunikationseinrichtung 1 erfolgen, beispielsweise mittels Benutzereingabe über eine Funktionstaste der IP-fähigen Telekommunikationseinrichtung 1. Solche Funktionstasten können als Taster und / oder berührungssensitive Flächen auf einem Display an der IP-fähigen Telekommunikationseinrichtung bereitgestellt sein.

Den Funktionstasten sind jeweils ein oder mehrere Aktions-Befehle zugeordnet, wobei die Zuordnung darin bestehen kann, dass der Funktionstaste ein individueller Steuerbefehl für eines oder mehrere der KNX-fähigen Elemente 4.1,..., 4.n zugeordnet ist.

Es kann vorgesehen sein, dass der Funktionstaste weiterhin eine Gruppenadresse zugeordnet ist, die zu dem KNX-fähigen Element gehört, welches mittels Betätigen der Funktionstaste angesteuert werden soll. Entsprechende Zuordnungsdaten können in einer Speichereinrichtung 5 gespeichert sein, die als der IP-fähigen Telekommunikationseinrichtung 1 oder getrennt hiervon gebildet ist.

Zum Erzeugen der Zuordnungsdaten in den verschiedenen Ausführungsformen kann vorgesehen sein, dass eine Zuordnungseingabe des Benutzers an der IP-fähigen Telekommunikationseinrichtung 1 empfangen wird, wobei die Zuordnungseingabe festlegen kann, welcher Steuerbefehl einer Funktionstaste zugeordnet wird.

Wird in der IP-fähigen Telekommunikationseinrichtung 1, bei der es sich beispielsweise um ein IP-Telefon handeln kann, eine Befehlseingabe empfangen, wird ein Aktions-Befehl bereitgestellt, der in der IP-fähigen Telekommunikationseinrichtung 1 oder in einer hiermit verbunden Server-Einrichtung (nicht dargestellt) erzeugt werden kann. Der Aktions-Befehl umfasst folgende Bestandteile: IP-Adresse der Gateway-Einrichtung 2, eine Gruppenadresse eines KNX-fähigen Elements sowie einen Steuerbefehl zum Steuern des KNX-fähigen Elements.

Der Aktions-Befehl kann in der IP-fähigen Telekommunikationseinrichtung 1 weiterhin eine Port-Identifizierung umfassend bereitgestellt werden, welche ein Zugriffs-Port eines Webservers angibt, der in der Gateway-Einrichtung 2 implementiert ist. In der Gateway-Einrichtung 2 wird über den Zugriffs-Port auf den Webserver zugegriffen. Die Port-Identifizierung gibt an, welcher Port für den Zugriff auf den Webserver in der Gateway-Einrichtung 2 zu nutzen ist, also hierfür bereitgestellt ist.

Auf das Empfangen des Aktions-Befehls, der beispielsweise mit einem HTTP-Request ausgeführt sein kann, prüft die Gateway-Einrichtung 2, anhand von elektronischen Informationen über das Gebäudeautomatisierungssystem 3, die in der Gateway-Einrichtung 2 bereitgestellt sind, ob das in dem Aktions-Befehl identifizierte KNX-fähige Element Teil der KNX-fähigen Elemente 4.1,..., 4.n des Gebäudeautomatisierungssystems 3 ist. Wenn das der Fall ist, wird der Aktions-Befehl von der Gateway-Einrichtung 2 in einen KNX-Befehl dem KNX-Busstandard entsprechend umgewandelt und an das in dem Aktions-Befehl identifizierte KNX-fähige Element übertragen, um dort dann den Steuerbefehl auszuführen, also beispielsweise die Beleuchtung oder die Heizung ein- oder auszuschalten.

In einer alternativen Ausgestaltung kann vorgesehen sein, dass die Befehlseingabe an der IP-fähigen Telekommunikationseinrichtung 1 in Form von Steuerdaten empfangen wird, die als Reaktion auf Sensorsignale einer Sensoreinrichtung 6 erzeugt wurden. Mit Hilfe der Sensoreinrichtung 6 können unterschiedliche physikalische Parameter detektiert werden, beispielsweise Helligkeit und / oder Temperatur. Die Sensoreinrichtung 6 kann Teil der IP-fähigen Telekommunikationseinrichtung 1 oder getrennt hiervon gebildet sein.

Ein oder mehrere weitere IP-fähigen Telekommunikationseinrichtungen 7 können vorgesehen sein und vergleichbar die IP-fähigen Telekommunikationseinrichtung 1 zum Steuern der KNX-fähigen Elemente 4.1,..., 4.n eingebunden und genutzt werden.

Eine weitere Ausgestaltungsvariante kann eine Sprachsteuerung vorsehen. Sprachbefehl-Eingaben können über mittels der IP-fähigen Telekommunikationseinrichtung 1 empfangen werden, zum Beispiel ein IP-fähiges Telefon, eine DECT-fähige mobile Komponente oder eine externe Sensoreinrichtung, die ein Mikrofon aufweisen kann.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Steuern eines KNX-fähigen Elements eines Gebäudeautomatisierungssystems (3), mit:
- Empfangen einer Befehlseingabe in einer IP-fähigen Telekommunikationseinrichtung (1);
- Bereitstellen eines Aktions-Befehls als Reaktion auf die Befehlseingabe in der IP-fähigen Telekommunikationseinrichtung (1), wobei der Aktions-Befehl Folgendes umfasst:
- eine IP-Adresse einer Gateway-Einrichtung (2), welche mit einem Gebäudeautomatisierungssystem (3) verbunden ist, in dem ein KNX-Busstandard implementiert ist;
- eine Gruppenadresse, die einem KNX-fähigen Element zugeordnet ist; und
- einen Steuerbefehl zum Steuern des KNX-fähigen Elements;
- Übertragen des Aktions-Befehls an die Gateway-Einrichtung (2);
- Bereitstellen von Gruppenadress-Information in der Gateway-Einrichtung (2);
- Bestimmen, ob die Gruppenadresse von der Gruppenadress-Information umfasst ist;
- Bereitstellen eines KNX-Befehls in der Gateway-Einrichtung (2), wenn die Gateway-Einrichtung (2) die Gruppenadresse als von Gruppenadress-Information umfasst bestimmt wurde, wobei der KNX-Befehl dem KNX-Busstandard entsprechend ausgebildet ist und zumindest der Gruppenadresse des KNX-fähigen Elements und den Steuerbefehl umfasst;
- Übertragen des KNX-Befehls von der Gateway-Einrichtung (2) an das KNX-fähige Element in dem Gebäudeautomatisierungssystem (3) und
- Steuern eines Betriebszustands des KNX-fähige Elementes entsprechend dem Steuerbefehl.

2. Verfahren nach Anspruch 1, **dadurch gekennzeichnet, dass** der Aktions-Befehl in der IP-fähigen Telekommunikationseinrichtung (1) weiterhin eine Port-Identifizierung umfassend bereitgestellt wird, welche ein Zugriffs-Port eines Webservers angibt, der in der Gateway-Einrichtung (2) implementiert ist, und auf das Empfangen des Aktions-Befehls in dem Gateway-Einrichtung (2) über den Zugriffs-Port auf den Webserver zugegriffen wird.

3. Verfahren nach Anspruch 1 oder 2, **dadurch gekennzeichnet, dass** die Befehlseingabe in einem IP-fähigen Telefon empfangen und der Aktions-Befehl als Reaktion hierauf in dem IP-fähigen Telefon bereitgestellt wird.

4. Verfahren nach mindestens einem der vorangehenden Ansprüche, **dadurch gekennzeichnet, dass** in der IP-fähigen Telekommunikationseinrichtung (1) weiterhin Folgendes vorgesehen ist:
- Empfangen der Befehlseingabe über eine Funktionstaste der IP-fähigen Telekommunikationseinrichtung (1) und
- Bestimmen eines Steuerbefehls, welcher der Funktionstaste zugeordnet ist.

5. Verfahren nach Anspruch 4, **dadurch gekennzeichnet, dass** weiterhin Folgendes vorgesehen ist:
- Bereitstellen von Zuordnungsdaten in einer Speichereinrichtung, die mit der IP-fähigen Telekommunikationseinrichtung (1) verbunden ist, wobei die Zuordnungsdaten für das KNX-fähige Element und ein weiteres KNX-fähiges Element des Gebäudeautomatisierungssystems (3) eine Zuordnung zwischen verschiedenen Aktions-Befehlen und Funktionstasten der IP-fähigen Telekommunikationseinrichtung (1) anzeigen; und
- Bestimmen, eines Aktions-Befehls aus den verschiedenen Aktions-Befehlen, welcher der Funktionstaste zugeordnet ist, über welche die Befehlseingabe empfangen wird.

6. Verfahren nach Anspruch 5, **dadurch gekennzeichnet, dass** weiterhin Folgendes vorgesehen ist:
- Empfangen einer Zuordnungseingabe in der IP-fähigen Telekommunikationseinrichtung (1), welche für das KNX-fähige Element und das weitere KNX-fähige Element des Gebäudeautomatisierungssystems (3) die Zuordnung zwischen den verschiedenen Aktions-Befehlen und den Funktionstasten der IP-fähigen Telekommunikationseinrichtung (1) anzeigt; und
- Erzeugen der Zuordnungsdaten.

7. Verfahren nach mindestens einem der vorangehenden Ansprüche, **dadurch gekennzeichnet, dass** das Empfangen der Befehlseingabe und / oder der Zuordnungseingabe Folgendes umfasst: Empfangen einer Befehlseingabe und / oder einer Zuordnungseingabe durch einen Benutzer über eine grafische Benutzerschnittstelle der IP-fähigen Telekommunikationseinrichtung (1).

8. Verfahren nach mindestens einem der vorangehenden Ansprüche, **dadurch gekennzeichnet, dass** das Empfangen der Befehlseingabe Folgendes umfasst:
- Detektieren von Sensorsignalen mittels einer Sensoreinrichtung (6);
- Bereitstellen von Steuerdaten als Reaktion auf die detektierten Sensorsignale in der IP-fähigen Telekommunikationseinrichtung (1) und
- Erzeugen des Aktions-Befehls als Reaktion auf die Steuerdaten in der IP-fähigen Telekommunikationseinrichtung (1).

9. Verfahren nach Anspruch 8, **dadurch gekennzeichnet, dass** beim Detektieren Sensorsignale mittels einer internen Sensoreinrichtung erfasst werden, die von der IP-fähigen Telekommunikationseinrichtung (1) umfasst ist.

10. Verfahren nach Anspruch 8 oder 9, **dadurch gekennzeichnet, dass** beim Detektieren Sensorsignale mittels einer externen Sensoreinrichtung erfasst werden, die getrennt von der IP-fähigen Telekommunikationseinrichtung (1) gebildet und mit dieser zur Signalübertragung verbunden ist.

11. Verfahren nach mindestens einem der vorangehenden Ansprüche, **dadurch gekennzeichnet, dass** der Aktions-Befehl und / oder die verschiedenen Aktions-Befehle jeweils als eine HTTP-Anfrage ausgebildet werden.

12. Verfahren nach mindestens einem der vorangehenden Ansprüche, **dadurch gekennzeichnet, dass** das KNX-fähige Element auf den Empfang des KNX-Befehls eine Antwort-Nachricht erzeugt und an die Gateway-Einrichtung (2) sendet.

13. Anordnung, bei der eine IP-fähige Telekommunikationseinrichtung (1), eine Gateway-Einrichtung (2) und ein KNX-fähiges Element für Folgendes eingerichtet sind:
- Empfangen einer Befehlseingabe in der IP-fähigen Telekommunikationseinrichtung (1);
- Bereitstellen eines Aktions-Befehls als Reaktion auf die Befehlseingabe in der IP-fähigen Telekommunikationseinrichtung (1), wobei der Aktions-Befehl Folgendes umfasst:
- eine IP-Adresse der Gateway-Einrichtung (2), welche mit einem einen KNX-Busstandard implementierenden Gebäudeautomatisierungssystem (3) verbunden ist;
- eine Gruppenadresse, die dem KNX-fähigen Element zugeordnet ist; und
- einen Steuerbefehl zum Steuern des KNX-fähigen Elements;
- Übertragen des Aktions-Befehls an die Gateway-Einrichtung (2);
- Bereitstellen von Gruppenadress-Information in der Gateway-Einrichtung (2);
- Bestimmen, ob die Gruppenadresse von der Gruppenadress-Information umfasst ist;
- Bereitstellen eines KNX-Befehls in der Gateway-Einrichtung (2), wenn die Gateway-Einrichtung (2) die Gruppenadresse als von Gruppenadress-Information umfasst bestimmt wurde, wobei der KNX-Befehl dem KNX-Busstandard entsprechend ausgebildet ist und zumindest der Gruppenadresse des KNX-fähigen Elements und den Steuerbefehl umfasst;
- Übertragen des KNX-Befehls von der Gateway-Einrichtung (2) an das KNX-fähige Element in dem Gebäudeautomatisierungssystem (3) und
- Steuern eines Betriebszustands des KNX-fähige Elementes entsprechend dem Steuerbefehl.

## Claims

1. A method for controlling a KNX-enabled element of a building automation system (3), comprising:
- receiving a command input in an IP-enabled telecommunications device (1);
- providing an action command in response to the command input in the IP-enabled telecommunications device (1), wherein the action command comprises the following:
- an IP address of a gateway device (2), which is connected to a building automation system (3) in which a KNX bus standard is implemented;
- a group address which is assigned to a KNX-enabled element; and
- a control command for controlling the KNX-enabled element;
- transmitting the action command to the gateway device (2);
- providing group address information in the gateway device (2);
- determining whether the group address is comprised by the group address information;
- providing a KNX command in the gateway device (2) if the gateway device (2) has determined that the group address is comprised by the group address information, wherein the KNX command is configured to correspond to the KNX bus standard and comprises at least the group address of the KNX-enabled element and the control command;
- transmitting the KNX command from the gateway device (2) to the KNX-enabled element in the building automation system (3); and
- controlling an operating state of the KNX-enabled element according to the control command.

2. The method according to Claim 1, **characterised in that** the action command in the IP-enabled telecommunications device (1) is provided furthermore comprising a port identifier, which indicates an access port of a web server implemented in the gateway device (2), and the web server is accessed via the access port in response to the receipt of the action command in the gateway device (2).

3. The method according to Claim 1 or 2, **characterised in that** the command input is received in an IP-enabled telephone, and the action command is provided in the IP-enabled telephone in response thereto.

4. The method according to at least one of the preceding claims, **characterised in that** the following is also provided in the IP-enabled telecommunications device (1):
- receiving the command input via a function key of the IP-enabled telecommunications device (1); and
- determining a control command which is assigned to the function key.

5. The method according to Claim 4, **characterised in that** the following is also provided:
- providing assignment data in a storage device which is connected to the IP-enabled telecommunications device (1), wherein the assignment data indicates an assignment between different action commands and function keys of the IP-enabled telecommunications device (1) for the KNX-enabled element and a further KNX-enabled element of the building automation system (3); and
- determining, from the different action commands, an action command which is assigned to the function key via which the command input is received.

6. The method according to Claim 5, **characterised in that** the following is also provided:
- receiving an assignment input in the IP-enabled telecommunications device (1), which indicates the assignment between the different action commands and the function keys of the IP-enabled telecommunications device (1) for the KNX-enabled element and the further KNX-enabled element of the building automation system (3); and
- generating the assignment data.

7. The method according to at least one of the preceding claims, **characterised in that** the receipt of the command input and/or of the assignment input comprises the following: receiving a command input and/or an assignment input by a user via a graphical user interface of the IP-enabled telecommunications device (1).

8. The method according to at least one of the preceding claims, **characterised in that** the receipt of the command input comprises the following:
- detecting sensor signals by means of a sensor device (6);
- providing control data in response to the detected sensor signals in the IP-enabled telecommunications device (1); and
- generating the action command in response to the control data in the IP-enabled telecommunications device (1).

9. The method according to Claim 8, **characterised in that** during detection, sensor signals are sensed by means of an internal sensor device which is included in the IP-enabled telecommunications device (1).

10. The method according to Claim 8 or 9, **characterised in that** during detection, sensor signals are sensed by means of an external sensor device which is formed separately from the IP-enabled telecommunications device (1) and is connected thereto for signal transmission.

11. The method according to at least one of the preceding claims, **characterised in that** the action command and/or the different action commands are each configured as an HTTP request.

12. The method according to at least one of the preceding claims, **characterised in that** in response to the receipt of the KNX command, the KNX-enabled element generates a response message and sends it to the gateway device (2).

13. An arrangement in which an IP-enabled telecommunications device (1), a gateway device (2) and a KNX-enabled element are configured for the following:
- receiving a command input in the IP-enabled telecommunications device (1);
- providing an action command in response to the command input in the IP-enabled telecommunications device (1), wherein the action command comprises the following:
- an IP address of the gateway device (2) which is connected to a building automation system (3) implementing a KNX bus standard;
- a group address which is assigned to the KNX-enabled element; and
- a control command for controlling the KNX-enabled element;
- transmitting the action command to the gateway device (2);
- providing group address information in the gateway device (2);
- determining whether the group address is comprised by the group address information;
- providing a KNX command in the gateway device (2) if the gateway device (2) has determined that the group address is comprised by the group address information, wherein the KNX command is configured to correspond to the KNX bus standard and comprises at least the group address of the KNX-enabled element and the control command;
- transmitting the KNX command from the gateway device (2) to the KNX-enabled element in the building automation system (3); and
- controlling an operating state of the KNX-enabled element according to the control command.

## Revendications

1. Procédé de commande d'un élément compatible KNX d'un système d'automatisation de bâtiment (3), comprenant de :
- recevoir une entrée de commande dans un dispositif de télécommunications compatible IP (1) ;
- fournir une commande d'action en réponse à l'entrée de commande dans le dispositif de télécommunications compatible IP (1), dans lequel la commande d'action comprend :
- une adresse IP d'un dispositif de passerelle (2) qui est connecté à un système d'automatisation de bâtiment (3), dans lequel une norme de bus KNX est implémentée ;
- une adresse de groupe attribuée à un élément compatible KNX ; et
- une instruction de commande pour commander l'élément compatible KNX ;
- transmettre la commande d'action au dispositif passerelle (2) ;
- fournir des informations d'adresse de groupe dans le dispositif passerelle (2) ;
- déterminer si l'adresse de groupe est comprise dans les informations d'adresse de groupe ;
- fournir une commande KNX dans le dispositif de passerelle (2), si le dispositif de passerelle (2) a déterminé l'adresse de groupe comme étant composée d'informations d'adresse de groupe, dans lequel la commande KNX est conçue conformément à la norme de bus KNX et comprend au moins l'adresse de groupe de l'élément compatible KNX et l'instruction de commande ;
- transmettre la commande KNX du dispositif de passerelle (2) à l'élément compatible KNX dans le système d'automatisation du bâtiment (3) et
- commander un état de fonctionnement de l'élément compatible KNX conformément à l'instruction de commande.

2. Procédé selon la revendication 1, **caractérisé en ce que** la commande d'action dans le dispositif de télécommunications compatible IP (1) est en outre pourvue d'un identifiant de port, qui spécifie un port d'accès d'un serveur Web, qui est implémenté dans le dispositif de passerelle (2), et la réception de la commande d'action dans le dispositif de passerelle (2) est accessible via le port d'accès sur le serveur Web.

3. Procédé selon la revendication 1 ou 2, **caractérisé en ce que** l'entrée de commande est reçue dans un téléphone compatible IP et la commande d'action est fournie en réponse à celle-ci dans le téléphone compatible IP.

4. Procédé selon au moins une des revendications précédentes, **caractérisé en ce que** dans le dispositif de télécommunications compatible IP (1) il est également prévu de :
- recevoir l'entrée de commande via une touche de fonction du dispositif de télécommunication compatible IP (1) ; et
- déterminer une instruction de commande, qui est affectée à la touche de fonction.

5. Procédé selon la revendication 4, **caractérisé en ce qu'**il est également prévu de :
- fournir des données d'affectation dans un dispositif de stockage qui est connecté au dispositif de télécommunication compatible IP (1), dans lequel les données d'affectation pour l'élément compatible KNX et un autre élément compatible KNX du système d'automatisation de bâtiment (3) affichent une affectation entre les différentes commandes d'action et les touches de fonction du dispositif de télécommunications compatible IP (1) ; et
- déterminer une commande d'action à partir des différentes commandes d'action, qui est affectée à la touche de fonction, via laquelle l'entrée de commande est reçue.

6. Procédé selon la revendication 5, **caractérisé en ce qu'**il est également prévu de :
- recevoir une entrée d'attribution dans le dispositif de télécommunications compatible IP (1), qui, pour l'élément compatible KNX et l'autre élément compatible KNX du système d'automatisation de bâtiment (3), affiche l'attribution entre les diverses commandes d'action et les touches de fonction du dispositif de télécommunications compatible IP (1) indique ; et
- générer des données cartographiques.

7. Procédé selon au moins une des revendications précédentes, **caractérisé en ce que** la réception de l'entrée de commande et/ou de l'entrée d'association comprend de : recevoir une entrée de commande et/ou une entrée d'association par un utilisateur via une interface d'utilisateur graphique du dispositif de télécommunication compatible IP (1).

8. Procédé selon au moins une des revendications précédentes, **caractérisé en ce que** la réception de l'entrée de commande comprend de :
- détecter des signaux de capteur au moyen d'un dispositif de capteur (6) ;
- fournir des données de commande en réponse aux signaux de capteur détectés dans le dispositif de télécommunication compatible IP (1) et
- générer la commande d'action en réponse aux données de commande dans le dispositif de télécommunications compatible IP (1).

9. Procédé selon la revendication 8, **caractérisé en ce que** lors de la détection, des signaux de capteur sont enregistrés au moyen d'un dispositif de capteur interne qui est compris dans le dispositif de télécommunication compatible IP (1).

10. Procédé selon la revendication 8 ou 9, **caractérisé en ce que** pendant la détection, des signaux de capteur sont détectés au moyen d'un dispositif de capteur externe qui est formé séparément du dispositif de télécommunication compatible IP (1) et qui lui est connecté pour la transmission de signaux.

11. Procédé selon au moins une des revendications précédentes, **caractérisé en ce que** la commande d'action et/ou les différentes commandes d'action sont formées respectivement sous la forme d'une requête HTTP.

12. Procédé selon au moins une des revendications précédentes, **caractérisé en ce que** l'élément compatible KNX génère un message de réponse lors de la réception de la commande KNX et l'envoie au dispositif de passerelle (2).

13. Agencement dans lequel un dispositif de télécommunications compatible IP (1), un dispositif de passerelle (2) et un élément compatible KNX sont configurés pour :
- recevoir une entrée de commande dans un dispositif de télécommunications compatible IP (1) ;
- fournir une commande d'action en réponse à l'entrée de commande dans le dispositif de télécommunications compatible IP (1), dans lequel la commande d'action comprend :
- une adresse IP d'un dispositif de passerelle (2) qui est connecté à un système d'automatisation de bâtiment (3), dans lequel une norme de bus KNX est implémentée ;
- une adresse de groupe attribuée à un élément compatible KNX ; et
- une instruction de commande pour commander l'élément compatible KNX ;
- transmettre la commande d'action au dispositif passerelle (2) ;
- fournir des informations d'adresse de groupe dans le dispositif passerelle (2) ;
- déterminer si l'adresse de groupe est comprise dans les informations d'adresse de groupe ;
- fournir une commande KNX dans le dispositif de passerelle (2), si le dispositif de passerelle (2) a déterminé l'adresse de groupe comme étant composée d'informations d'adresse de groupe, dans lequel la commande KNX est conçue conformément à la norme de bus KNX et comprend au moins l'adresse de groupe de l'élément compatible KNX et l'instruction de commande ;
- transmettre la commande KNX du dispositif de passerelle (2) à l'élément compatible KNX dans le système d'automatisation du bâtiment (3) et
- commander un état de fonctionnement de l'élément compatible KNX conformément à l'instruction de commande.
